# EUROPEAN PATENT APPLICATION

(11) **EP 1 505 117 A1**
(43) Date of publication of application: **09.02.2005**
(21) Application number: 04291936.5
(22) Date of filing: 29.07.2004
(51) Int. Cl.: C08L 27/16, C09D 127/16, C08K 3/04, H01C 7/02, H05B 3/14, B32B 27/28

(54) **PVDF-based PTC paints and their applications for self-regulated heating systems**

(30) Priority: 01.08.2003 FR 0309550; 08.03.2004 FR 0402395
(71) Applicant: ARKEMA, 92800 Puteaux (FR)
(72) Inventor: Korzhenko, Alexander, 27800 Saint Victor d'Epine (FR); Bonnet, Anthony, 27170 Beaumont le Roger (FR); Caupin, Henri-Jean, 78000 Versailles (FR); Lechartier, Corinne, 27170 Parc (FR); Rivas, Nadine, 76500 La Londe (FR); Vivien, Marine, 78171 Fouqueux (FR)
(74) Representative: Neel, Henry

(57) **Abstract**

The present invention relates to a composition comprising, by weight, the total being 100%:
A) 40 to 80% of PVDF;
B) 10 to 40% of PMMA; and
C) 10 to 40% of a conductive filler.

This composition has a PTC effect and is advantageously used in the form of a film (paint) covering a substrate.

The composition of the invention is dissolved in a solvent and then spread over a substrate and the solvent evaporated. The metal terminals for connection to the electrical circuit may be placed at the ends of the coating before or after application.

The invention also relates to a composite, namely the substrate covered with the PTC composition described above.

## Description

### [Field of the invention]

The present invention relates to a conductive paint having a temperature-wise self-regulated resistance. It relates more particularly to a paint based on PVDF (polyvinylidene fluoride), or PMMA and containing a conductor such as, for example, carbon black or any other electrical conductor.

It is possible to make a polymer material conductive by incorporating graphite. Application of a high enough voltage leads to the material heating up by the Joule effect. In the absence of a circuit breaker mechanism, the temperature increases until the material is destroyed. The paint of the present invention shows an increase in resistance as a function of temperature (Positive Temperature Coefficient or PTC effect) so that the current stabilizes at an equilibrium temperature. This PTC effect therefore allows the intensity of the current to be thermally regulated - this has many advantages compared with conventional resistors. Electrical heating systems are conventionally regulated by including a thermal cut-out in the circuit. Should the latter fail, the circuit or the safety fuse burns out. The PTC material self-regulates without it being necessary to include either a cut-out or a fuse.

### [Prior art and the technical problem]

Patent application **EP 1 205 514** discloses a composite comprising, by weight, the total being 100%:
40 to 90% of PVDF homopolymer or copolymer essentially crystallized in the β form;
10 to 60% of a conductive filler;
0 to 40% of a crystalline or semicrystalline polymer;
0 to 40% of a filler different from the above crystalline or semicrystalline polymer;
and such that the crystals are nucleated in the β form on the surface of the conductive filler particles.

This material is applied as a coating deposited on an insulating substrate such as one made of ceramic, glass, wood, textile fibres, fabrics or any insulating surface. To prepare the coating, all that is required is to disperse the conductive filler in the PVDF, which may be either in the melt or in solution in a suitable solvent such as, for example, acetone or N-methylpyrrolidone. The PVDF containing the conductive filler and optionally the crystalline polymer and the other filler, which is either in the melt or in a solvent, is applied as a paint to the insulating surface. The metal terminals for connection to the electrical circuit may be placed at the ends of the coating before or after application. After cooling the molten polymer or after drying, in order to remove the solvent, the heating element is ready.

As regards the filler other than the crystalline or semicrystalline polymer, the description mentions "....the usual fillers for fluoropolymers, such as silica, PMMA, UV stabilizers, etc.".

It has now been found that PMMA is a necessary constituent and that this is not a simple filler in the same sense as silica or UV stabilizers. It has also been found that PVDF may be in any crystalline form.

### [Brief description of the invention]

The present invention relates to a composition comprising, by weight, the total being 100%:
A) 40 to 80% (advantageously 50 to 80%) of PVDF;
B) 10 to 40% of PMMA; and
C) 10 to 40% of a conductive filler.

This composition has a PTC effect and is advantageously used in the form of a film (paint) covering a substrate.

The composition of the invention is dissolved in a solvent and then spread over a substrate and the solvent evaporated. The metal terminals for connection to the electrical circuit may be placed at the ends of the coating before or after application.

The PVDF is responsible for the temperature self-regulation by the PTC effect thanks to its semicrystalline morphology. The present composition based on PVDF, on PMMA and on a conductive filler (graphite in the form of flakes and/or carbon black) gives materials of higher performance and operating with greater safety. The presence of the PMMA reduces the crystallinity of the PVDF and makes it possible to achieve better cohesion of the system and better adhesion of the paint.

The invention also relates to a composite, namely the substrate completely or partly covered with the PTC composition described above.

### [Detailed description of the invention]

As regards the PVDF, this term denotes both VDF (vinylidene fluoride, sometimes also called VF2) homopolymers and VDF copolymers. The term "VDF copolymers" denotes polymers based on VDF and on at least one other fluorinated monomer. The fluorinated comonomer is advantageously selected from compounds that contain a vinyl group capable of opening in order to be polymerized and that contain, directly attached to this vinyl group, at least one fluorine atom, a fluoroalkyl group or a fluoroalkoxy group.

As examples of comonomers, mention may be made of vinyl fluoride; trifluoroethylene (VF3); chlorotrifluoroethylene (CTFE); 1,2-difluoroethylene; tetra-fluoroethylene (TFE); hexafluoropropylene (HFP); perfluoro(alkyl vinyl) ethers, such as perfluoro(methyl vinyl) ether (PMVE), perfluoro(ethyl vinyl) ether (PEVE) and perfluoro(propyl vinyl) ether (PPVE); perfluoro(1,3-dioxole); perfluoro(2,2-dimethyl-1,3-dioxole) (PDD); the product of formula CF₂=CFOCF₂CF(CF₃)OCF₂CF₂X in which X is SO₂F, CO₂H, CH₂OH, CH₂OCN or CH₂OPO₃H; the product of formula CF₂=CFOCF₂CF₂SO₂F; the product of formula F(CF₂)ₙCH₂OCF=CF₂ in which n is 1, 2, 3, 4 or 5; the product of formula R₁CH₂OCF=CF₂ in which R₁ is hydrogen or F(CF₂)_{z} and z is 1, 2, 3 or 4; the product of formula R₃OCF=CH₂ in which R₃ is F(CF₂)_{z}- and z is 1, 2, 3 or 4; perfluorobutylethylene (PFBE); 3,3,3-trifluoropropene and 2-trifluoromethyl-3,3,3-trifluoro-1-propene. Several comonomers may be used.

Mention may be made of VDF/VF3 copolymers containing at least 60, advantageously at least 75 and preferably at least 85 mol% VDF.

Mention may also be made of VDF/TFE/HFP copolymers containing at least 15 mol% TFE units and advantageously VDF/TFE/HFP copolymers having a respective molar composition of 60 to 80/15 to 20/0 to 25 (the total being 100).

Mention may also be made of vinylidene fluoride (VDF) copolymers preferably containing at least 60 wt% VDF, the comonomer being selected from chlorotrifluoroethylene (CTFE), hexafluoropropylene (HFP), trifluoroethylene (VF3) and tetrafluoroethylene (TFE). Advantageously, the proportion of VDF is at least 75% and preferably at least 85%. Among these comonomers, HFP is preferred.

Advantageously the PVDF (A) is a blend of (A1) selected from PVDF homopolymers and VDF/HFP copolymers containing at least 85 wt% VDF and of (A2) which are VDF/TFE/HFP copolymers containing at least 15 mol% TFE units and advantageously VDF/TFE/HFP copolymers of respective molar composition 60 to 80/15 to 20/0 to 25 (the total being 100). The proportions of (A1) and (A2) may be in the ratio (A1)/(A2) between 20/80 and 80/20 by weight.

The PVDF may be partly or completely modified, that is to say functional groups may be introduced thereinto the purpose of which is to promote bonding between the paint and the substrate. Advantageously, the modified PVDF is selected from:
- PVDFs grafted with an unsaturated monomer, the grafting being carried out by irradiation of a blend in the absence of oxygen;
- PVDFs irradiated in the presence of oxygen (these also being referred to as oxidized PVDFs 1); and
- dehydrofluorinated and then oxidized PVDFs (also referred to as oxidized PVDFs 2).

Advantageously, all that is required is to modify one fraction of the PVDF (A) - this fraction may be between 0.5 and 30% of (A) by weight. Preferably, it is the PVDF (A1) that is completely or partly modified.

The modified PVDFs will now be described. They are prepared from the PVDFs described above.

With regard to the grafted PVDFs, these may be prepared by a method of grafting an unsaturated monomer onto the PVDF, in which:
a) the fluoropolymer is melt-blended with the unsaturated monomer;
b) the blend obtained in a) is formed into films, sheets, granules or powder;
c) the products from step b) are subjected, in the absence of air, to photon (γ) or electron (β) irradiation with a dose between 1 and 15 Mrad; and
d) the product obtained at c) is optionally treated in order to remove all or some of the unsaturated monomer that has not been grafted onto the fluoropolymer.

With regard to the unsaturated grafting monomer, mention may be made, by way of examples, of carboxylic acids and their derivatives, acid chlorides, isocyanates, oxazolines, epoxides, amines and hydroxides. Examples of unsaturated carboxylic acids are those having 2 to 20 carbon atoms, such as acrylic, methacrylic, maleic, fumaric and itaconic acids. The functional derivatives of these acids comprise, for example, anhydrides, ester derivatives, amide derivatives, imide derivatives and metal salts (such as alkali metal salts) of unsaturated carboxylic acids. Undecylenic acid may also be mentioned. Unsaturated dicarboxylic acids having 4 to 10 carbon atoms and their functional derivatives, particularly their anhydrides, are particularly preferred grafting monomers. These grafting monomers comprise, for example, maleic, fumaric, itaconic, citraconic, allylsuccinic, cyclohex-4-ene-1,2-dicarboxylic, 4-methylcyclohex-4-ene-1,2-dicarboxylic, bicyclo[2.2.1]hept-5-ene-2,3-dicarboxylic and x-methylbicyclo-[2.2.1]hept-5-ene-2,3-dicarboxylic acids and maleic, itaconic, citraconic, allylsuccinic, cyclohex-4-ene-1,2-dicarboxylic, 4-methylenecyclohex-4-ene-1,2-dicarboxylic, bicyclo-[2.2.1]hept-5-ene-2,3-dicarboxylic and x-methyl-bicyclo[2.2.1]hept-5-ene-2,2-dicarboxylic anhydrides.

Examples of other grafting monomers comprise C₁-C₈ alkyl esters or glycidyl ester derivatives of unsaturated carboxylic acids, such as methyl acrylate, methyl methacrylate, ethyl acrylate, ethyl methacrylate, butyl acrylate, butyl methacrylate, glycidyl acrylate, glycidyl methacrylate, monoethyl maleate, diethyl maleate, monomethyl fumarate, dimethyl fumarate, monomethyl itaconate and diethyl itaconate; amide derivatives of unsaturated carboxylic acids, such as acrylamide, methacrylamide, the monoamide of maleic acid, the diamide of maleic acid, the N-monoethylamide of maleic acid, the N,N-diethylamide of maleic acid, the N-monobutylamide of maleic acid, the N,N-dibutylamide of maleic acid, the monoamide of fumaric acid, the diamide of fumaric acid, the N-monoethylamide of fumaric acid, the N,N-diethylamide of fumaric acid, the N-monobutylamide of fumaric acid and the N,N-dibutylamide of fumaric acid; imide derivatives of unsaturated carboxylic acids, such as maleimide, N-butylmaleimide and N-phenylmaleimide; and metal salts of unsaturated carboxylic acids, such as sodium acrylate, sodium methacrylate, potassium acrylate and potassium methacrylate.

Advantageously, maleic anhydride is used.

Step a) is carried out in any blending device, such as extruders or mixers used in the thermoplastics industry.

With regard to the proportions of the PVDF and of the unsaturated monomer, the proportion of PVDF is advantageously, by weight, from 90 to 99.9% per 0.1 to 10% of unsaturated monomer, respectively. Preferably, the proportion of PVDF is from 95 to 99.9% per 0.1 to 5% of unsaturated monomer, respectively.

After step a), it is found that the blend of the PVDF and the unsaturated monomer has lost about 10 to 50% of the unsaturated monomer that had been introduced at the start of step a). This proportion depends on the volatility and the nature of the unsaturated monomer. In fact, the monomer was vented in the extruder or the blender and it was recovered from the venting circuits.

As regards step c), the products recovered after step b) are advantageously packaged in polyethylene bags, the air is expelled and the bags then sealed. As regards the method of irradiation, it is possible to use, without distinction, electron irradiation, more commonly known as β irradiation, and photon irradiation, more commonly known as γ irradiation. Advantageously, the dose is between 2 and 6 Mrad and preferably between 3 and 5 Mrad.

With regard to step d), the ungrafted monomer may be removed by any means. The proportion of grafted monomer relative to the amount of monomer present at the start of step c) is between 50 and 100%. The product may be washed with solvents that are inert to the PVDF and to the grafted functional groups. For example, when grafting with maleic anhydride, the product may be washed with chlorobenzene. It is also possible, more simply, to vacuum-degas the product recovered at step c).

As regards the oxidized PVDF 1, these may be prepared by a method of oxidizing the fluoropolymer, in which:
a) the PVDF is formed into films, sheets, granules or powder;
b) the products from step a) are subjected, in the presence of oxygen, to photon (γ) or electron (β) irradiation with a dose of between 1 and 15 Mrad; and
c) the product obtained at b) is optionally treated in order to remove all or some of the by-product impurities.

As regards the irradiation and, firstly, step a), the products are advantageously packaged in polyethylene bags and the bags are not inerted. Advantageously, the PVDF is in the form of powder. The bags may also include an aluminium layer in addition to the polyethylene layer. It is unnecessary to irradiate in the presence of pure oxygen - all that is required is for oxygen to be present. The irradiation may be carried out in the presence of an inert gas containing oxygen. The term "inert gas" denotes a gas that is not involved in the irradiation reaction or in the modification of the fluoropolymer by oxygen. Advantageously, the proportion of oxygen is between 1 and 20% by volume per 99 to 80% of inert gas, respectively. Advantageously, the irradiation is carried out in the presence of air. As regards the irradiation method in step b), it will be possible to use, without distinction, electron irradiation, more commonly known as β irradiation, and photon irradiation, more commonly known as γ irradiation. Advantageously, the dose is between 2 and 12 Mrad and preferably between 2 and 8 Mrad.

As regards step c), the impurities may be removed by any means. The product may be washed with solvents inert to the oxidized PVDF. It is also possible, more simply, to vacuum-degas the product recovered at step b).

As regards the oxidized PVDFs 2, these may be prepared by the process disclosed in Patent EP 1 054 023. This discloses a process for chemically modifying a fluoropolymer, consisting in partially dehydrofluorinating it and then bringing it into contact with an oxidizing agent, especially hydrogen peroxide or a hypochlorite.

With regard to the PMMA, this denotes both methyl methacrylate homopolymers and copolymers containing at least 50 wt% methyl methacrylate. As examples of comonomers, mention may be made, for example, of alkyl (meth)acrylates, acrylonitrile, butadiene, styrene and isoprene. Examples of alkyl (meth)acrylates are described in Kirk-Othmer, Encyclopedia of chemical technology, 4th edition in Volume 1, pages 292-293 and in Volume 16, pages 475-478. Advantageously, the PMMA may contain, by weight, 0 to 20% and preferably 5 to 15% of at least one other alkyl (meth)acrylate such as, for example methyl acrylate and/or ethyl acrylate. The PMMA may be functionalized, that is to say it contains, for example, acid, acid chloride, alcohol, anhydride or ureido functional groups. These functional groups may be introduced by grafting or by copolymerization. As regards acid functional groups, these are advantageously an acid functional group provided by the acrylic or methacrylic acid comonomer. Two adjacent acrylic acid functional groups may undergo dehydration to form an anhydride.

The proportion of functional groups may be from 0 to 15% by weight of the PMMA, including the optional functional groups.

The PMMA may contain an acrylic elastomer. There are in fact commercially available grades of PMMA called "impact grades" that contain acrylic impact modifiers, usually of the core/shell type. These acrylic impact modifiers may also be present in the PMMA because they have been introduced during its polymerization or prepared simultaneously with its polymerization. This proportion of acrylic elastomer may be, by weight, from 0 to 30 parts per 100 to 70 parts of PMMA respectively.

As regards the acrylic elastomer, this denotes elastomers based on at least one monomer selected from acrylonitrile, alkyl (meth)acrylates and core/shell copolymers. As regards the core/shell copolymer, this is in the form of fine particles having an elastomer core and at least one thermoplastic shell, the particle size being generally less than 1 µm and advantageously between 50 and 300 nm. By way of example of the core, mention may be made of isoprene homopolymers or butadiene homopolymers, copolymers of isoprene with at most 30 mol% of a vinyl monomer and copolymers of butadiene with at most 30 mol% of a vinyl monomer. The vinyl monomer may be styrene, an alkylstyrene, acrylonitrile or an alkyl (meth)acrylate. Another core family consists of the homopolymers of an alkyl (meth)acrylate and the copolymers of an alkyl (meth)acrylate with at most 30 mol% of a monomer selected from another alkyl (meth) acrylate and a vinyl monomer. The alkyl (meth)acrylate is advantageously butyl acrylate. The vinyl monomer may be styrene, an alkylstyrene, acrylonitrile, butadiene or isoprene. The core of the core/shell copolymer may be completely or partly crosslinked. All that is required is to add at least difunctional monomers during the preparation of the core; these monomers may be selected from poly(meth)acrylic esters of polyols, such as butylene di(meth)acrylate and trimethylolpropane trimethacrylate. Other difunctional monomers are, for example, divinylbenzene, trivinylbenzene, vinyl acrylate and vinyl methacrylate. The core can also be crosslinked by introducing into it, by grafting or as a comonomer during the polymerization, unsaturated functional monomers such as anhydrides of unsaturated carboxylic acids, unsaturated carboxylic acids and unsaturated epoxides. Mention may be made, by way of example, of maleic anhydride, (meth)acrylic acid and glycidyl methacrylate.

The shell(s) are styrene homopolymers, alkylstyrene homopolymers or methyl methacrylate homopolymers, or copolymers comprising at least 70 mol% of one of the above monomers and at least one comonomer selected from the other above monomers, another alkyl (meth)acrylate, vinyl acetate and acrylonitrile. The shell may be functionalized by introducing into it, by grafting or as a comonomer during the polymerization, unsaturated functional monomers such as anhydrides of unsaturated carboxylic acids, unsaturated carboxylic acids and unsaturated epoxides. Mention may be made, for example, of maleic anhydride, (meth)acrylic acid and glycidyl methacrylate.

By way of example, mention may be made of core/shell copolymers having a polystyrene shell and core-shell copolymers having a PMMA shell. There are also core-shell copolymers having two shells, one made of polystyrene and the other, on the outside, made of PMMA. Examples of copolymers and their method of preparation are described in the following patents: US 4,180,494, US 3,808,180, US 4,096,202, US 4,260,693, US 3,287,443, US 3,657,391, US 4,299,928, US 3,985,704 and US 5,773,520.

Advantageously, the core represents, by weight, 70 to 90% of the core/shell copolymer and the shell represents 30 to 10%.

By way of example of a copolymer, mention may be made of that consisting (i) of 75 to 80 parts of a core comprising at least 93 mol% of butadiene, 5 mol% of styrene and 0.5 to 1 mol% of divinylbenzene and (ii) of 25 to 20 parts of two shells essentially of the same weight, the inner one made of polystyrene and the outer one made of PMMA.

As another example, mention may be made of those having a poly(butyl acrylate) or butyl acrylate/butadiene copolymer core and a PMMA shell.

As regards the conductive filler (C), this may be selected from powders of all electrically conducting materials and advantageously powder metals, carbon black, graphite and metal oxides. Advantageously, (C) is selected from carbon black (preferably with a pH of 2 to 7) and graphite. Advantageously, the graphite (whether natural or synthetic) is in the form of flakes. Preferably, its particle size is between 5 and 50 µm.

The composite of the invention is prepared by dissolving the various constituents (A), (B) and (C) in a solvent until a thick dispersion is obtained, which may be applied as a paint to the substrate. The solvent may be selected from acetone, isophorone, dimethylformamide (DMF), methyl ethyl ketone (MEK), N,N-dimethylacetamide and N-methylpyrrolidone (NMP). A person skilled in the art selects the solvent according to the nature of the PVDF, i.e. depending on whether there is a greater or lesser amount of homopolymer. The amount of solvent needed may be from two to five parts by weight per one part of the composition.

The substrate may be electrically conducting - and in this case it serves as a current lead-in - and a conducting material is placed on the paint, which material covers the paint completely or partly and allows the current to be returned.

Advantageously, the substrate is electrically insulating; the composition of the invention is deposited on the substrate and then at least one current lead-in means and at least one current return means are added. These means may already be present before spreading the paint. These means may be a copper or aluminium wire or strip, this wire or strip possibly occupying a substantial portion of the surface of the substrate in the manner of a printed circuit used in the electronics industry. In this case, the substrate is an insulating board on which the two - current lead-in and return - electrodes are in the form of a printed circuit and then the PTC composition is deposited on this circuit, on the side with the electrodes. By depositing a PTC paint film with a thickness of 20 to 30 µm on a PET support covered with a copper printed circuit makes it possible to heat to 65°C under a voltage of 13 V, and therefore *inter alia* to de-ice car rear-view mirrors.

According to another embodiment, the insulating substrate is a honeycomb that is covered with the composition of the invention, for example by dipping it into the solvent containing the said composition (paint) and then by evaporating the solvent. The honeycomb may be in the form of a sheet, a block, a cube or a parallelepiped. Two opposed faces are selected and a conductor is attached to each face, in contact with the paint that covers the honeycomb. It is also possible, instead of fixing a conductor, to cover each face with a silver lacquer. These conductors or this silver lacquer are (is) used for the current lead-in and return. The present invention also relates to the use of these honeycombs for heating a gas, for example air. It is thus possible to heat the passenger compartment of a motor vehicle or the cabin of an aircraft.

According to yet another embodiment, the substrate is a woven glass fabric (glass fibre meshes). The paint is deposited by any means and then the current lead-in and return wires are added, unless they are already contained in the woven glass fabric. Instead of a woven fabric made of glass, it is possible to use any insulator. Meshes impregnated with PTC paints may be used for the following applications: de-icing of industrial floors, de-icing of ship decks, heating of pipelines, heating of aircraft baggage holds, etc.

According to yet another embodiment, the insulating substrate is the outer layer of a hose - this outer layer may be made of rubber or of a thermoplastic (for example a polyamide, polyolefin, etc.). The current lead-in and return wires may be deposited after painting, but preferably they are deposited on the outer layer of the hose. Advantageously, they are in the form of a braid (for example made of polyester or polyamide) containing current lead-in and return wires. The paint is then deposited and this is advantageously followed by a covering with a protective layer. This protective layer may be made of a thermoplastic (provided that it withstands the temperature) or made of rubber. Thus, the invention is a hose comprising, going from the inside to the outside:
- optionally, an inner layer in contact with the fluid transported;
- an outer layer;
- a paint layer according to the invention and electric current lead-in and return means; and
- optionally, a protective layer.
The paint layer can optionally be carried on a woven or non-woven substrate, made for instance in polyamide or in polyester.

The inside diameter of the hose may have any value and is advantageously between 6 and 50 mm. The thickness of these hoses, that is to say the sum of the thickness of the optional inner layer(s) and the outer layer may be between 1 and 20 mm. These hoses can transport any type of fluid, but they are useful for fluids that crystallize or form blockages at low temperature. Mention may be made, for example, of diesel fuel, for motor vehicles with a diesel engine or for lorries, which often contains waxes that are deposited and cause blockages in winter or in cold countries.

The present invention also relates to heaters comprising the composite described above.

### [Examples]

**PVDF copolymer:** this denotes **Kynar® 9301,** a VF2/TFE/HFP copolymer having respective proportions of 72 / 18 / 10.
**PVDF homopolymer:** this denotes **Kynar® 500,** a PVDF homopolymer having an MFI of 4 g/10 min (at 230°C/5 kg).
**Graphite SFG 15:** this denotes a graphite of the TIMREX SFG 15 type, produced by Timcal Group. It is a synthetic graphite in the form of flakes and its particle size distribution lies between 0 and 20 µm.
**PMMA:** this denotes a PMMA copolymer containing MMA and ethyl acrylate, having a Tg of 60°C and a molar mass of 140000.
**Carbon black:** this is of the RAVEN 14 type, produced by Columbian Chemicals Europa GmbH (Germany). It is of acid pH.
**Maleic anhydride grafted PVDF:** this denotes **Kynar® 720,** which is a PVDF homopolymer from Atofina and has an MVI (Melt Volume Index) of 10 cm³/10 min (230°C/5 kg) that is radiation-grafted with 1% maleic anhydride.

### Example 1. PVDF/PVDF copolymer/PMMA/graphite

20, 25 or 30 g de graphite SFG 15 were added to 100 g of a PVDF homopolymer/PVDF copolymer/PMMA composition having proportions of 40/30/30 by weight. The polymers were blended together at 70°C and at 2000 rpm in order to allow the NMP to be properly dissolved. The fillers were then dispersed for 30 minutes at 3000 rpm.

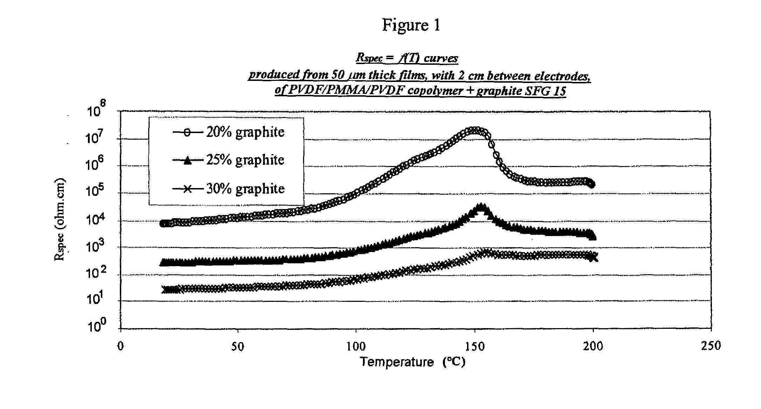

The paint was applied to a Teflon® (polytetrafluoroethylene sold by Dupont) sheet, then dried at 120°C and cured at 200°C in an oven. The film thus obtained was stripped from the Teflon® sheet and then analyzed. The results are given in Figure 1. The higher the filler content, the smaller the amplitude of the PTC effect and the lower the initial specific resistance. This therefore makes it possible to adjust the formulation according to the power desired for an application.

### Example 2. PVDF/PVDF copolymer/PMMA/graphite; application on a mesh

32 g of graphite SFG 15 were added to 100 g of a PVDF homopolymer/PVDF copolymer/PMMA composition having proportions of 40/30/30 by weight. This paint was prepared in the same way as indicated in Example 1.

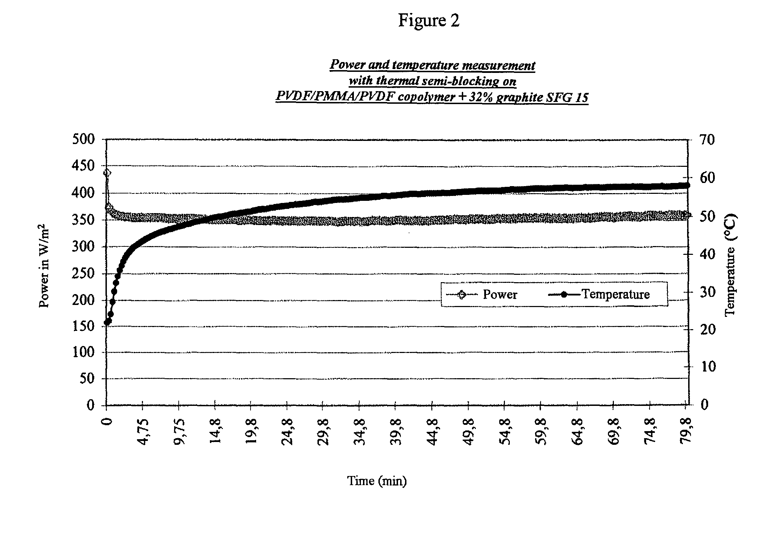

This paint was then applied to a glass fibre mesh provided with electrodes (Cu wires placed every 5 cm in the mesh), it was then dried at 120°C and then cured at 200°C. The stabilization temperature may be varied by using a thermal semi-block means (polymer matrix, glass wool, etc.), i.e. a glass wool or equivalent protection means is placed above this paint-impregnated mesh. The results are given in Figure 2.

### Example 3: PVDF/PVDF copolymer/PMMA/graphite or carbon black - application on a support covered with a copper printed circuit

20 g of graphite SFG 15 or 18 g of carbon black were added to 100 g of a PVDF homopolymer/PVDF copolymer/PMMA composition having proportions of 40/30/30 by weight. This paint was prepared in the same way as indicated in the case of Example 1.

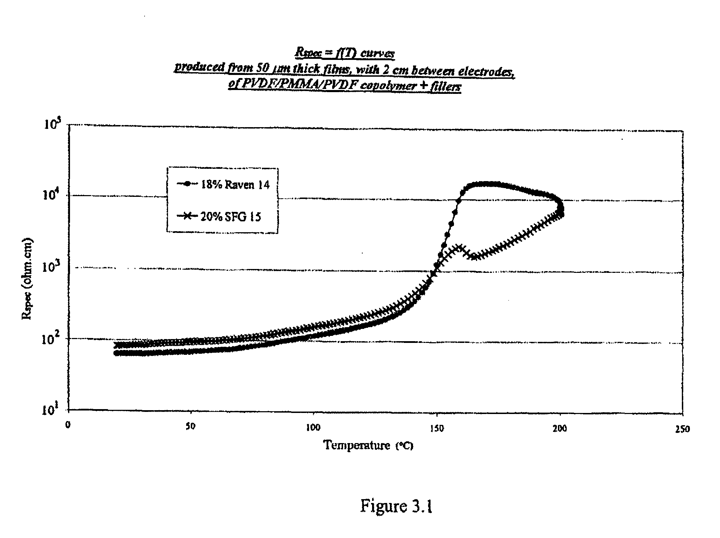

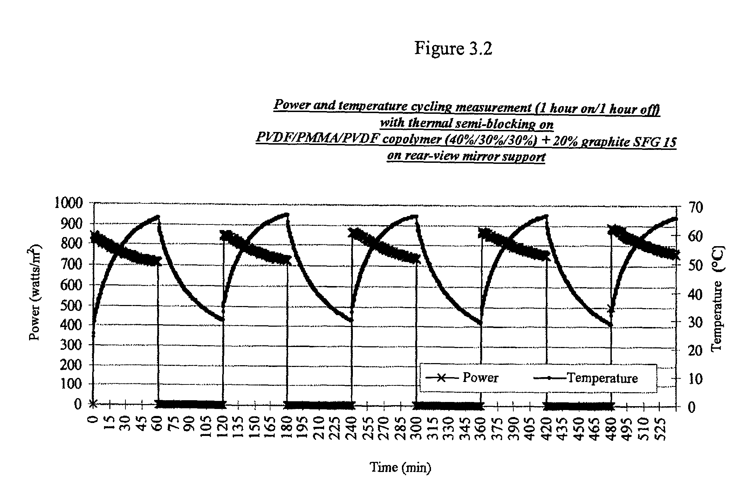

Depositing a PTC paint film with a thickness of 20 to 30 µm on a PET support covered with a copper printed circuit made it possible to heat to 65°C under a voltage of 13 V and therefore *inter alia,* to de-ice car rear-view mirrors. This paint, once applied, was oven-dried at 120°C. The power and the temperature were measured in cycling mode with a 13 volt supply (Figure 3-2).

This paint was also deposited, as in Example 1, as a 50 µm film on a Teflon® sheet and the specific resistance measured (Figure 3-1). Thus, the amplitude of the PTC effect is better with carbon black than with graphite. However, graphite allows better dispersion of the heat.

### Example 4. PVDF/PVDF copolymer/PMMA/graphite - application to a support covered with an aluminium printed circuit

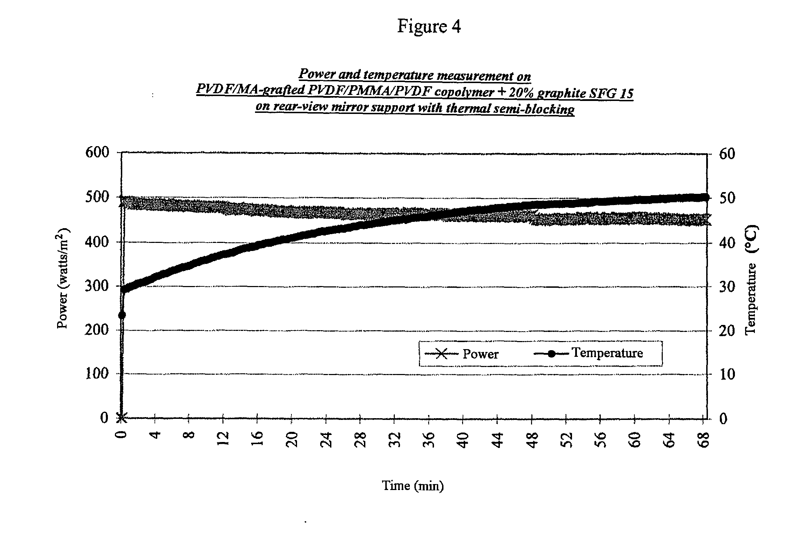

By dint of the intrinsic non-adhesive properties of PVDF, good adhesion of the paint to a copper, and especially an aluminium, printed circuit is difficult. The addition of maleic anhydride-grafted PVDF gives the material good adhesive properties and allows the dielectric properties to be maintained.
20 g of graphite SFG 15 were added to 100 g of a "PVDF homopolymer"/PVDF copolymer/PMMA composition having proportions of 40/30/30 by weight. The 40 g of PVDF homopolymer consisted of 20 g of PVDF homopolymer and 20 g of maleic-anhydride-grafted PVDF. The preparation of this paint was the same was that given in the case of Example 1. This paint was deposited on a rear-view mirror support consisting of a PET sheet covered with an aluminium printed circuit. The results are given in Figure 4.

It is possible to determine the resistance of such a specimen covered with PTC paint when it is not being used, by simply measuring it with an ohmmeter (called R_{calculated}). It is also possible to determine, by calculation, this same resistance when the rear-view mirror is under voltage (called R_{measured}). The formula R = U/I is then used.

The ratio Of Rmeasured to Rcalculated is denoted by "a".

| | **Specimen 1** | | | **Specimen 2** | | |
|---|---|---|---|---|---|---|
| ***Measurement No.*** | ***R***_{***measured***} | ***R***_{***calculated***} | ***a1*** | ***R***_{***measured***} | ***R***_{***calculated***} | ***a2*** |
| 1 | 14.8 | 13.4 | 1.10 | 10.1 | 10.2 | 0.99 |
| 2 | 13.8 | 12.9 | 1.07 | 10.1 | 10.3 | 0.98 |
| 3 | 14.2 | 12.4 | 1.15 | 10.3 | 10.4 | 0.99 |
| 4 | 13.4 | 12.9 | 1.04 | 10.2 | 10.1 | 1.01 |

(where Specimen 1 = the composition of the example but the PVDF homopolymer is entirely non-grafted PVDF homopolymer; Specimen 2 = the composition of the example).

Thus, a PTC paint containing maleic-anhydride-grafted PVDF allows better electrical contact with an aluminium printed circuit. In addition, the resistance is more constant and the return to a stable resistance value after application of voltage is more rapid.

### Example 5. PVDF/PVDF copolymer/PMMA/graphite - application to a three-dimensional support of the honeycomb type

Applying the paint to a three-dimensional support allows the surface area for heat transfer exchange to be considerably increased.

32 g of graphite SFG 15 were added to 100 g of a PVDF homopolymer/PVDF copolymer/PMMA composition having proportions of 40/30/30 by weight. This paint was prepared in the same way as that shown in Example 1.

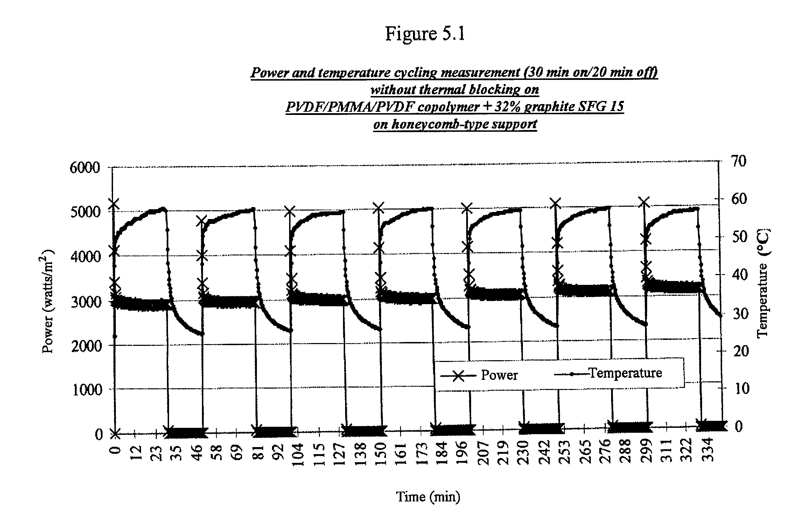

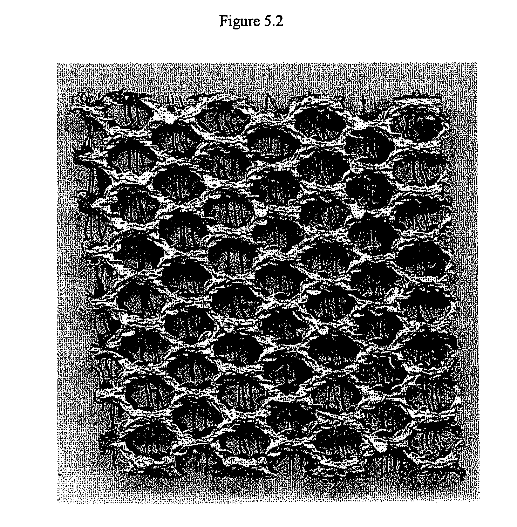

This paint, once applied to the honeycomb, was oven-dried at 120°C and then at 180°C. A thin silver lacquer was then deposited on the surface of each side of the specimen so as to ensure electrical connection. Two metal grids deposited on each side of the specimen could also be used as electrical contacts. The results are given in Figure 5-1. A photograph in Figure 5-2 shows this honeycomb.

## Claims

1. Composition comprising, by weight, the total being 100%:
A) 40 to 80% of PVDF;
B) 10 to 40% of PMMA; and
C) 10 to 40% of a conductive filler.

2. PTC paint with 1 part of composition according to Claim 1 and from 2 to 5 parts of a solvent.

3. PTC paint according to Claim 2 in which the solvent may be selected from acetone, isophorone, dimethylformamide, methylethylketone, N,N-dimethylacetamide and N-methylpyrrolidone.

4. Composition according to Claim 1, in which the PVDF is selected from VDF/TFE/HFP copolymers having a respective molar composition of 60 to 80/15 to 20/0 to 25 (the total being 100).

5. Composition according to Claim 1, in which the PVDF is selected from vinylidene fluoride (VDF) copolymers containing at least 60 wt% VDF, the comonomer being selected from chlorotrifluoroethylene (CTFE), hexafluoropropylene (HFP), trifluoroethylene (VF3) and tetrafluoroethylene (TFE).

6. Composition according to Claim 1, in which the PVDF (A) is a blend of (A1) selected from PVDF homopolymers and VDF/HFP copolymers containing at least 85 wt% VDF and of (A2) which are VDF/TFE/HFP copolymers of respective molar composition 60 to 80/15 to 20/0 to 25 (the total being 100).

7. Composition according to Claim 6, in which the proportions of (A1) and (A2) are in the ratio (A1)/(A2) of between 20/80 and 80/20 by weight.

8. Composition according to any one of the preceding claims, in which the PVDF is completely or partly modified and is selected from:
PVDFs grafted with an unsaturated monomer, the grafting being carried out by irradiation of a blend in the absence of oxygen;
PVDFs irradiated in the presence of oxygen; and
dehydrofluorinated and then oxidized PVDFs.

9. Composition according to Claim 8, in which the modified PVDF represents between 0.5 and 30% of (A) by weight.

10. Composition according to Claim 8 or 9, in which it is the PVDF (A1) that is completely or partly modified.

11. Composition according to any one of the preceding claims, in which the filler (C) is selected from graphite and carbon black.

12. Composite comprising a substrate completely or partly covered with the composition according to any one of the preceding claims.

13. Composite according to Claim 12, in which the substrate is a honeycomb formed from an insulator.

14. Composite according to Claim 13, in which, on each of the two opposite faces of the honeycomb, there is a conductor serving as the current lead-in and the current return.

15. Use of the material of Claim 13 or 14, to heat a gas.

16. Use according to Claim 15 in which the passenger compartments of motor vehicles or the cabins of aircraft are heated.

17. Composite according to Claim 12, in which the substrate is a woven fabric of glass or of an insulator.

18. Heater comprising the composite according to any one of Claims 12, 13, 14 and 17.

19. Composite which is a hose comprising, going from the inside to the outside:
- optionally, an inner layer in contact with the fluid transported;
- an outer layer;
- a paint layer according to any one of Claims 1 to 9 and electric current lead-in and return means; and
- optionally, a protective layer.
